# EUROPÄISCHE PATENTSCHRIFT

(11) **EP 2 537 239 B1**
(45) Veröffentlichungstag und Bekanntmachung des Hinweises auf die Patenterteilung: **06.04.2016**
(21) Anmeldenummer: 10798014.6
(22) Anmeldetag: 21.12.2010
(51) Int. Cl.: H02M 1/34, H02M 7/487

(54) **3-STUFEN-PULSWECHSELRICHTER MIT ENTLASTUNGSNETZWERK**
3-STAGE PULSE WIDTH MODULATION INVERTER WITH DISCHARGE NETWORK
ONDULEUR À DÉCOUPAGE À 3 ÉTAGES AVEC RÉSEAU DE DÉLESTAGE

(30) Priorität: 18.02.2010 DE 102010008426
(43) Veröffentlichungstag der Anmeldung: 26.12.2012
(73) Patentinhaber: Hochschule Konstanz, 78462 Konstanz (DE)
(72) Erfinder: GEKELER, Manfred W., 78464 Konstanz (DE)
(74) Vertreter: Gagel, Roland
(86) Internationale Anmeldenummer: PCT/EP2010/007849
(87) Internationale Veröffentlichungsnummer: WO 2011/101015

(56) Entgegenhaltungen:
- DE-A1- 4 219 644
- US-A1- 2009 244 936
- US-B1- 6 278 626
- TAKANO H ET AL: "Auxiliary resonant commutated soft-switching inverter with bidirectional active switches and voltage clamping diodes", CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001; [CONFERENCE RECORD OF THE IEEE INDUSTRY APPLICATIONS CONFERENCE. IAS ANNUAL MEETING], NEW YORK, NY : IEEE, US, Bd. 3, 30. September 2001 (2001-09-30), Seiten 1441-1446, XP010561884, DOI: 10.1109/IAS.2001.955725 ISBN: 978-0-7803-7114-9
- TEICHMANN R ET AL: "Investigation and comparison of auxiliary resonant commutated pole converter topologies", POWER ELECTRONICS SPECIALISTS CONFERENCE, 1998. PESC 98 RECORD. 29TH A NNUAL IEEE FUKUOKA, JAPAN 17-22 MAY 1998, NEW YORK, NY, USA,IEEE, US, Bd. 1, 17. Mai 1998 (1998-05-17), Seiten 15-23, XP010294861, DOI: 10.1109/PESC.1998.701873 ISBN: 978-0-7803-4489-1

## Beschreibung

### Technisches Anwendungsgebiet

Die vorliegende Erfindung betrifft eine Schaltungsanordnung, die wenigstens einen 3-Stufen-Pulswechselrichter mit einem Entlastungsnetzwerk umfasst und Eingangsanschlüsse für einen positiven Pol, einen negativen Pol und einen Mittelabgriff einer Eingangsspannung sowie einen Ausgangsanschluss aufweist, wobei der Pulswechselrichter wenigstens zwei äußere Schaltelemente, die mit den Eingangsanschlüssen für den positiven und den negativen Pol der Eingangsspannung verbunden sind, und zwei innere Schaltelemente aufweist, die mit dem Ausgangsanschluss verbunden sind. Bei einer derartigen Schaltungsanordnung dient das Entlastungsnetzwerk der Verringerung der Schaltverluste des Pulswechselrichters.

Pulswechselrichter erzeugen aus einer Gleichspannungsquelle eine oder mehrere gepulste Spannungen, die neben der Pulsfrequenz (einige kHz bis über 20 kHz) eine Grundschwingung mit einstellbarer Frequenz (0 bis ca. 500 Hz) und einstellbarem Spannungs-Effektivwert enthält. Sie werden in zahlreichen technischen Anwendungsgebieten wie bspw. der Antriebstechnik oder der Photovoltaik benötigt. So dienen in der Antriebstechnik die dort meist dreiphasigen Pulswechselrichter der Speisung von Drehfeldmaschinen (Synchronmotoren und Asynchronmotoren) und gewährleisten eine verlustarme Verstellung der Drehzahl. Im Bereich der Photovoltaik werden Wechselrichter für die Netzeinspeisung benötigt.
Solargeneratoren erzeugen elektrische Energie in Form von Gleichstrom und Gleichspannung. Um diese in den Wechsel- bzw. Drehstromversorgungsnetzen nutzbar zu machen, muss die Gleichspannung bzw. der Gleichstrom in eine netzsynchrone Wechsel- bzw. Drehspannung bzw. in einen netzsynchronen Wechsel- bzw. Drehstrom mit Netzfrequenz (50 Hz oder 60 Hz) umgewandelt werden. Für einphasige Netze werden einphasige Pulswechselrichter eingesetzt, für Drehstromnetze dreiphasige Ausführungen. Eine vergleichbare Netzeinspeisung ist auch bei elektrischen Antrieben im Generatorbetrieb erforderlich, bspw. bei Windkraftanlagen. Ein weiteres Anwendungsgebiet von Pulswechselrichtern ist die sog. Power Factor Correction (PFC): Wird bei der Entnahme oder der Einspeisung elektrischer Energie aus dem bzw. in das Wechsel- oder Drehstromnetz ein hoher Leistungsfaktor und somit ein weitgehend sinusförmiger Strom gefordert, kann dies mit ein- bzw. dreiphasigen Pulswechselrichtern erfolgen.

Die gepulste Ausgangsspannung eines Pulswechselrichters wird mit Hilfe von ein- und ausschaltbaren Leistungshalbleitern erzeugt. Diese werden als elektronische Schalter betrieben und in der vorliegenden Patentanmeldung als Schaltelemente bezeichnet. Leistungshalbleiter sind Halbleiterbauelemente, die für das Steuern und Schalten hoher elektrischer Ströme und Spannungen ausgelegt sind (mehr als 1 A und mehr als etwa 24 V). Beispiele für Leistungshalbleiter, die in Pulswechselrichtern zum Einsatz kommen können, sind Transistoren, wie bspw. MOSFET, JFET oder IGBT, oder durch Steuerpulse ein- und ausschaltbare Thyristoren wie GTO oder IGCT.

Beim sog. "harten" Schalten (Hard Switching) treten dabei während des Einschaltvorgangs und des Ausschaltvorgangs gleichzeitig hohe Werte von Spannung und Strom und somit sehr hohe Werte des Momentanwerts der Verlustleistung auf. Multipliziert mit der Anzahl der Ein- bzw. Ausschaltvorgänge je Sekunde, der sog. Schaltfrequenz, ergibt sich dann der Mittelwert der Schaltverlustleistung. Bei niedrigen Werten der Schaltfrequenz (bis ca. 1 kHz) ist die Schaltverlustleistung oft vernachlässigbar. Bei höheren Werten (über 10 kHz) dominieren jedoch die Schaltverluste, erhöhen die Gesamtverluste, verringern den Wirkungsgrad und limitieren bei sehr hohen Werten der Schaltfrequenz die Leistung des Pulswechselrichters.

In vielen Fällen ist eine hohe Schaltfrequenz jedoch erwünscht, bspw. um die Schaltfrequenz in den Ultraschallbereich zu verlagern und damit hörbare Geräusche beim Betrieb des Pulswechselrichters zu vermeiden, oder zwingend erforderlich, bspw. um bei Photovoltaik-Pulswechselrichtern einen geringen Klirrfaktor der Netzströme zu erhalten. Eine hohe Schaltfrequenz ist auch erforderlich, um bei induktivitätsarmen High Speed Drehstrommotoren die Stromwelligkeit gering zu halten und/oder eine hohe Regeldynamik zu ermöglichen.

### Stand der Technik

Eine bekannte Möglichkeit zur Verringerung der Schaltverluste besteht darin, anstelle von 2-Stufen-Pulswechselrichtern 3-Stufen-Pulswechselrichter einzusetzen. Letztere weisen nur noch ca. 50% der Schaltverluste eines 2-Stufen-Pulswechselrichters auf, da beim 3-Stufen-Pulswechselrichter die Spannungssprünge beim Schalten nur die Hälfte gegenüber einem 2-Stufen-Pulswechselrichter betragen.

Eine weitere Möglichkeit der Verringerung der Schaltverluste wird unter dem Oberbegriff des "weichen" Schaltens (Soft Switching) subsumiert. Das Ziel des "weichen" Schaltens besteht darin, das gleichzeitige Auftreten hoher Werte von Strom und Spannung während des Ein- bzw. Ausschaltvorgangs zu verhindern. Damit bleibt der Momentanwert der Verlustleistung als Produkt aus Strom und Spannung klein - und somit auch die Werte der Ein- bzw. Ausschaltverlustenergien und des Mittelwerts der Schaltverlustleistung -, selbst wenn die Schaltfrequenz sehr hohe Werte aufweist.

Es gibt verschiedene Techniken für die Realisierung des "weichen" Schaltens, die in Klassen der Entlastungsnetzwerke (Snubber), der quasiresonanten Schaltungen und der resonanten Schaltungen unterteilt werden können.

So ist bspw. aus der US 5,982,646 eine gattungsgemäße Schaltungsanordnung aus einem 3-Stufen-Pulswechselrichter und einem Entlastungsnetzwerk bekannt. Mit dieser Schaltungsanordnung gelingt es zwar, die Schaltverluste in den Leistungshalbleitern deutlich zu reduzieren. Das Entlastungsnetzwerk arbeitet aber verlustbehaftet, das heißt es produziert seinerseits Verluste, die in der Regel größer sind als die eingesparten Schaltverluste. Damit ist eine Verbesserung des Wirkungsgrads nicht möglich. Zudem hängen die zeitlichen Abläufe der Entlastungsfunktion stark vom Momentanwert des Laststroms ab. Dies erschwert Pulssteuerverfahren.

Aus der DE 199 45 864 A1 ist ein 3-Stufen-Stromrichter bekannt, der über eine quasi-resonante Schaltung "weich" geschaltet wird. Quasi-resonante Schaltungen reduzieren zwar die Schaltverluste prinzipbedingt verlustfrei. Sie sind aber sehr aufwendig und teuer. So kommen in der DE 199 45 864 A1 nochmals vier Leistungshalbleiter hinzu, die die gleiche Stromtragfähigkeit aufweisen müssen wie die Leistungshalbleiter des Pulswechselrichters selbst. Außerdem ist die Steuerung der jetzt insgesamt acht Leistungshalbleiter sehr kompliziert. Bei einer auch nur geringen Fehlsteuerung kann es dabei zur Zerstörung von Bauelementen kommen.

In dem Artikel von S. Munk-Nielsen et al., "Comparison of soft and hard switching efficiency in a three-level single phase 60 kW dc-ac converter", Aalborg University, Denmark, http://www.nsn.aau.dk/GetAsset.action?contentId=2375551 &assetId=3519794 (Abruf am 15.02.2010) wird ein Beispiel für eine resonante Schaltung zum "weichen" Schalten eines 3-Stufen-Pulswechselrichters gezeigt. Die Schaltungsanordnung hat jedoch einen schlechten Gesamtwirkungsgrad und zeigt massive Einschränkungen in der Steuerbarkeit.

Ausgehend von diesem Stand der Technik besteht die Aufgabe der vorliegenden Erfindung darin, eine Schaltungsanordnung mit einem Pulswechselrichter anzugeben, die sämtliche Schaltverluste prinzipbedingt vollständig vermeidet, einfach aufgebaut ist und keine zusätzlichen ein- und ausschaltbaren Leistungshalbleiter erfordert.

### Darstellung der Erfindung

Die Aufgabe wird mit der Schaltungsanordnung gemäß Patentanspruch 1 gelöst. Vorteilhafte Ausgestaltungen der Schaltungsanordnung sind Gegenstand der abhängigen Patentansprüche oder lassen sich der nachfolgenden Beschreibung sowie den Ausführungsbeispielen entnehmen.

Die vorgeschlagene Schaltungsanordnung umfasst wenigstens einen 3-Stufen-Pulswechselrichter mit einem Entlastungsnetzwerk und Eingangsanschlüssen für einen positiven Pol, einen negativen Pol und einen Mittelabgriff der Eingangsspannung sowie einen Ausgangsanschluss, an dem die gepulste Ausgangsspannung des Pulswechselrichters abgreifbar ist. Der 3-Stufen-Pulswechselrichter ist dabei in bekannter Weise aufgebaut, d. h. er weist wenigstens zwei äußere Schaltelemente, die mit den Eingangsanschlüssen für den positiven und den negativen Pol der Eingangsspannung verbunden sind, und zwei innere Schaltelemente auf, die mit dem Ausgangsanschluss verbunden sind. Hierbei können bekannte Schaltungstopologien von 3-Stufen-Pulswechselrichtern realisiert sein, insbesondere in Form des sog. "Three Level Stack Cell" (3L-SC) oder in Form des sog. "Three Level Neutral Point Clamped Inverter" (3L-NPC).

Die vorgeschlagene Schaltungsanordnung zeichnet sich dadurch aus, dass das Entlastungsnetzwerk aus wenigstens einer Spule bzw. Drossel, zwei Kondensatoren und einer Reihenschaltung aus vier in gleicher Richtung gepolten Dioden gebildet ist. Die beiden äußeren Dioden sind jeweils direkt mit den Eingangsanschlüssen für den positiven und den negativen Pol der Eingangsspannung verbunden. Die elektrische Verbindung zwischen den beiden inneren Dioden ist einerseits über die Spule mit dem Eingangsanschluss für den Mittelabgriff der Eingangsspannung und andererseits mit dem mittleren Brückenzweig des Pulswechselrichters verbunden. In einer Ausgestaltung der Schaltungsanordnung sind die beiden Kondensatoren jeweils mit einem Anschluss direkt mit der jeweiligen direkten elektrischen Verbindung zwischen einer der inneren und der dieser in der Reihenschaltung benachbarten äußeren Diode und mit dem anderen Anschluss direkt mit dem Ausgangsanschluss verbunden. In einer anderen Ausgestaltung, insbesondere im Fall eines als 3L-LC ausgebildeten 3-Stufen-Pulswechselrichters, sind die beiden Kondensatoren jeweils mit einem Anschluss direkt mit der jeweiligen direkten elektrischen Verbindung zwischen einer der inneren und der dieser in der Reihenschaltung benachbarten äußeren Diode und mit dem anderen Anschluss über die beiden inneren Schaltelemente des Pulswechselrichters mit dem Ausgangsanschluss verbunden.

Eine Verbindung zwischen unterschiedlichen Elementen der Schaltungsanordnung bedeutet in der vorliegenden Patentanmeldung immer eine elektrische Verbindung. Unter einer direkten Verbindung wird eine elektrische Verbindung verstanden, bei der keine weiteren kapazitiven oder induktiven Elemente oder Dioden zwischengeschaltet sind. Selbstverständlich kann jedoch eine derartige Verbindung einen ohmschen Widerstand aufweisen. Als Schaltelemente, auch als Ventile bezeichnet, können in der vorgeschlagenen Schaltungsanordnung ein- und ausschaltbare Leistungshalbleiter eingesetzt werden, wie sie beispielhaft bereits in der Beschreibungseinleitung genannt sind.

Die vorliegende Schaltungsanordnung lässt sich sowohl für einen einphasigen als auch für mehrphasige 3-Stufen-Pulswechselrichter ausbilden. Im Falle einer Schaltungsanordnung zur Erzeugung von dreiphasigen Ausgangsspannungen umfasst die Schaltungsanordnung für jede Phase einen einphasigen 3-Stufen-Pulswechselrichter mit dem entsprechend beschriebenen Entlastungsnetzwerk. Alle drei einphasigen Pulswechselrichter und zugehörigen Entlastungsnetzwerke werden dabei mit der gleichen Eingangsspannung verbunden bzw. teilen sich die gleichen Eingangsanschlüsse, weisen jedoch unterschiedliche Ausgangsanschlüsse - für die jeweiligen Phasen - auf. Die Eingangsspannung kann selbstverständlich auch eine Zwischenkreisspannung sein.

Mit der vorgeschlagenen Schaltungsanordnung werden sämtliche Schaltverluste prinzipbedingt vollständig vermieden. Durch den einfachen Aufbau des Entlastungsnetzwerkes, das in einer bevorzugten Ausgestaltung lediglich aus einer Spule, zwei Kondensatoren und vier Dioden besteht, lässt sich die Schaltungsanordnung sehr kostengünstig, klein und leicht realisieren. Es sind keine zusätzlichen teuren ein- und ausschaltbaren Leistungshalbleiter und somit auch keine aufwendigen Steuerschaltungen erforderlich. Die Zeitdauer der Entlastungsfunktion des vorgeschlagenen Entlastungsnetzwerkes ist nur in geringem Maße vom Laststrom abhängig und somit günstig für Pulssteuerverfahren. Die Schaltungsanordnung hat den weiteren Vorteil einer robusten und fehlertoleranten Steuerung ohne die Gefahr von Fehlfunktionen. In einer zusätzlichen Ausbaustufe, bei der insbesondere die äußeren Schaltelemente geeignet angesteuert werden, ist die Schaltungsanordnung zudem sehr EMV-freundlich (EMV: elektromagnetische Verträglichkeit), da die Steilheit du/dt der erzeugten Spannungspulse leicht auf unkritische Werte von du/dt < 1 kV/µs begrenzt werden kann.

In einer bevorzugten Ausgestaltung der vorgeschlagenen Schaltungsanordnung ist der 3-Stufen-Pulswechselrichter als 3L-SC ausgebildet, wie dies bspw. in den nachfolgenden Ausführungsbeispielen näher erläutert ist.

In einer Erweiterung der vorgeschlagenen Schaltungsanordnung wird parallel zur Spule des Entlastungsnetzwerks ein Zweipol mit teilweise ohmscher Charakteristik geschaltet, bspw. durch eine Reihenschaltung aus einem Kondensator und einem Widerstand. Dadurch können mögliche hochfrequente Schwingungen am Ende eines Kommutierungsvorganges gedämpft werden. Selbstverständlich lässt sich dieser Zweipol in anderer Weise realisieren.

In der vorliegenden Beschreibung und den nachfolgenden Ausführungsbeispielen wird nicht näher auf die Steuereinrichtung zur Ansteuerung der Schaltelemente des Pulswechselrichters eingegangen. Die Ausbildung einer derartigen Steuereinrichtung ist dem Fachmann aus dem Stand der Technik von Pulswechselrichtern bekannt. In einer besonderen Ausgestaltung der vorliegenden Schaltungsanordnung wird diese Steuereinrichtung derart ausgestaltet, dass das Einschalten der beiden äußeren Schaltelemente gezielt verlangsamt wird. Damit werden geringere EMV-Belastungen erhalten.

### Kurze Beschreibung der Zeichnungen

Die vorgeschlagene Schaltungsanordnung wird nachfolgend anhand von Ausführungsbeispielen in Verbindung mit den Zeichnungen nochmals näher erläutert. Hierbei zeigen:
- Fig. 1: ein Beispiel eines 3-Stufen-Pulswechselrichters in 3L-SC Ausführung gemäß dem Stand der Technik;
- Fig. 2: ein Beispiel eines 3-Stufen-Pulswechselrichters in 3L-NPC Ausführung gemäß dem Stand der Technik;
- Fig. 3: ein erstes Beispiel für eine Ausgestaltung der vorgeschlagenen Schaltungsanordnung;
- Fig. 4a-d: ein Beispiel für einen Kommutierungsvorgang bei der Schaltungsanordnung der Figur 3;
- Fig. 5: ein zweites Beispiel für eine Ausgestaltung der vorgeschlagenen Schaltungsanordnung;
- Fig. 6: ein drittes Beispiel für eine Ausgestaltung der vorgeschlagenen Schaltungsanordnung;
- Fig. 7: ein viertes Beispiel für eine Ausgestaltung der vorgeschlagenen Schaltungsanordnung; und
- Fig. 8: ein Beispiel für die Ausbildung eines Zweipols im Entlastungsnetzwerk der vorgeschlagenen Schaltungsanordnung.

### Wege zur Ausführung der Erfindung

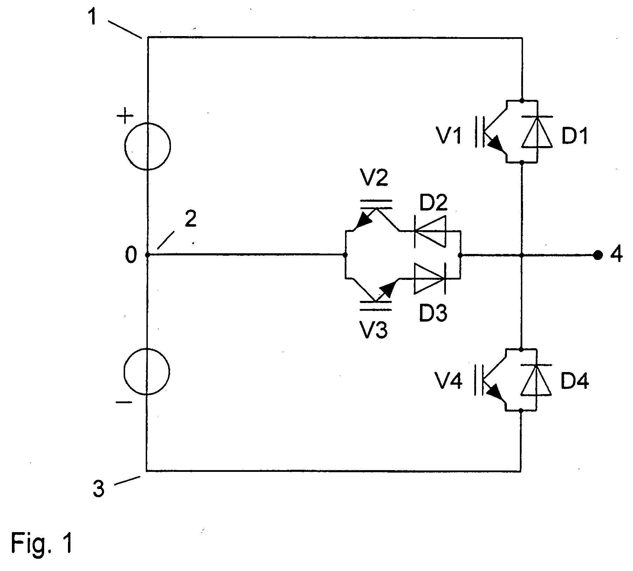

Figur 1 zeigt beispielhaft eine Ausgestaltung eines Drei-Stufen-Pulswechselrichters in 3L-SC Form gemäß dem Stand der Technik. Dieser Pulswechselrichter ist mit seinem oberen Brückenzweig mit dem Eingangsanschluss 1 für den positiven Pol der Eingangsspannung, mit seinem unteren Brückenzweig mit dem Eingangsanschluss 3 für den negativen Pol der Eingangsspannung sowie mit seinem mittleren Brückenzweig mit dem Eingangsanschluss 2 für den Mittelabgriff der Eingangsspannung verbunden. Er weist vier Schaltelemente V1 bis V4 auf, die über eine nicht dargestellte Steuereinrichtung so angesteuert, d. h. ein- und ausgeschaltet, werden, dass am Ausgangsanschluss 4 eine gepulste Ausgangsspannung abgegriffen werden kann. Antiparallel zu den Schaltelementen V1 bis V4 sind jeweils Dioden D1 bis D4 geschaltet.

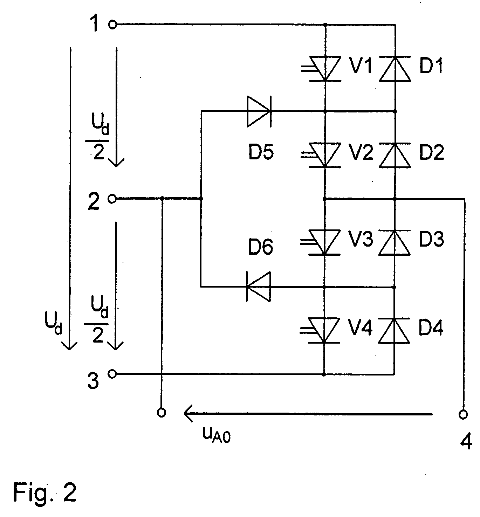

Figur 2 zeigt ein Beispiel eines 3-Stufen-Pulswechselrichters in 3L-NPC Form gemäß dem Stand der Technik. Auch bei diesem Pulswechselrichter sind der obere Brückenzweig, der untere Brückenzweig sowie der mittlere Brückenzweig mit den Eingangsanschlüssen 1-3 für den positiven Pol, den negativen Pol und den Mittelabgriff der Eingangsspannung verbunden. Dieser Pulswechselrichter umfasst ebenfalls vier Schaltelemente V1 bis V4 mit den jeweils antiparallel geschalteten Dioden D1 bis D4 sowie zusätzlich zwei weitere Dioden D5, D6 im mittleren Brückenzweig.

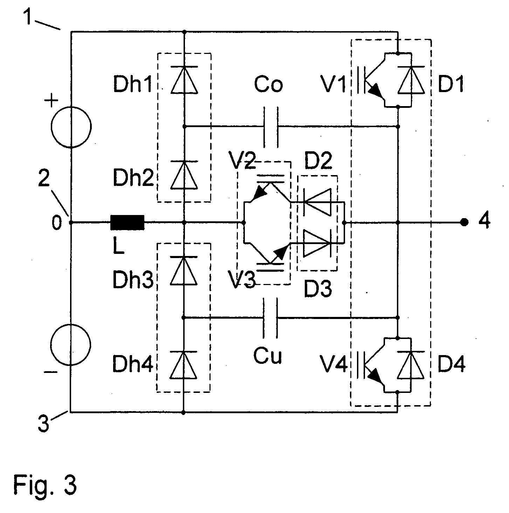

Beide Ausgestaltungen der Figuren 1 und 2 stellen "hart" schaltende Pulswechselrichter dar, die gerade bei hohen Schaltfrequenzen hohe Leistungsverluste aufweisen. Um diese Schaltverluste zu vermeiden, wird dem Pulswechselrichter bei der vorgeschlagenen Schaltungsanordnung ein Entlastungsnetzwerk hinzugefügt. Figur 3 zeigt hierzu ein erstes Ausführungsbeispiel der vorgeschlagenen Schaltungsanordnung, bei der der 3-Stufen-Pulswechselrichter der Figur 1 mit dem Entlastungsnetzwerk verbunden ist. Diese Ausgestaltung hat gegenüber den später dargestellten anderen Ausgestaltungen den Vorteil des einfachsten Aufbaus und der geringsten Anzahl an Leistungsbauelementen.

Das Entlastungsnetzwerk besteht aus einer Spule L, zwei Kondensatoren Co und Cu sowie vier in Reihe gleichpolig verschalteten Dioden Dh1 bis Dh4. Die Anschlüsse der beiden äußeren Dioden Dh1 und Dh4 sind direkt mit den Eingangsanschlüssen 1 bzw. 3 für den positiven bzw. negativen Pol der Gleichspannung (Eingangsspannung) verbunden. Die Kondensatoren Co bzw. Cu sind mit einem Anschluss mit der elektrischen Verbindung zwischen der inneren Dh2 und benachbarten äußeren Diode Dh1 bzw. der inneren Dh3 und benachbarten äußeren Diode Dh4 und mit ihrem anderen Anschluss direkt mit dem Ausgangsanschluss 4 der Schaltungsanordnung bzw. des Pulswechselrichters verbunden. Die ohne Entlastungsnetzwerk bestehende Verbindung zwischen dem Eingangsanschluss 2 für den Mittelabgriff der Eingangsspannung und dem mittleren Brückenzweig, d. h. den inneren Schaltelementen V2 und V3 (vgl. Figur 1) wurde aufgetrennt. Hier wurde die Spule L eingefügt, die außerdem - ebenso wie der mittlere Brückenzweig - mit der Verbindung zwischen den beiden inneren Dioden Dh2, Dh3 verbunden ist. Diese Verschaltung ist der Figur 3 zu entnehmen.

Ein derartiger Schaltungsaufbau lässt sich sehr vorteilhaft mit kommerziell erhältlichen Modulen realisieren, die gestrichelt in der Figur 3 angedeutet sind. Durch die Verfügbarkeit kommerzieller Module für die einzelnen Bauteile bzw. Bauteilgruppen lässt sich die vorgeschlagene Schaltungsanordnung sehr kostengünstig realisieren.

Ein 3-Stufen-Pulswechselrichter weist drei sog. Schaltzustände auf, die im Folgenden mit "oben", "mitte" und "unten" bezeichnet werden, womit die Stromführung über den oberen, den mittleren oder den unteren Brückenzweig in der Darstellung der Figur 3 gemeint ist. Bei jedem dieser Schaltzustände kann der Laststrom positiv oder negativ und im Sonderfall auch 0 sein. Daraus resultieren mehrere mögliche Schaltvorgänge, auch als Kommutierung bezeichnet, zwischen diesen Schaltzuständen: oben → mitte, mitte → oben, mitte → unten, unten → mitte, oben → unten und unten → oben, jeweils für Laststrom > 0, für Laststrom < 0 und für Laststrom = 0. Aus Symmetriegründen kann diese Zahl der Schaltvorgänge auf vier Schaltvorgänge (+ zwei Sonderfälle für Laststrom = 0) reduziert werden:

| Laststrom > 0 | Sonderfall: Laststrom = 0 |
|---|---|
| oben → mitte | oben → mitte |
| mitte → oben | mitte → oben |
| mitte → unten | mitte → unten (wie mitte → oben) |
| unten → mitte | unten → mitte (wie oben → mitte) |

Die Sonderfälle Laststrom = 0 können mit den vier Fällen für Laststrom > 0 zusammengefasst werden:

| Laststrom ≥ 0 |
|---|
| oben → mitte |
| mitte → oben |
| mitte → unten |
| unten → mitte |

Diese vier Kommutierungen laufen unterschiedlich ab. Gemeinsam ist ihnen, dass während des jeweiligen Vorgangs an jedem der Schaltelemente nie gleichzeitig hohe Werte von Spannung und Strom auftreten. Damit weist der Momentanwert der Verlustleistung als Produkt aus Spannung und Strom nur geringe Werte auf, so dass auch der Mittelwert der Schaltverlustleistung klein bleibt. Der gewünschte Effekt der Entlastung von Schaltverlusten ist damit erreicht. Der Entlastungseffekt wird erzielt, da aufgrund der Kondensatoren im Entlastungsnetzwerk Spannungen an den Schaltelementen nur mit begrenzter Steilheit du/dt ansteigen können oder/und aufgrund der Spule im Entlastungsnetzwerk Ströme durch die Schaltelemente nur mit begrenzter Steilheit di/dt ansteigen können.

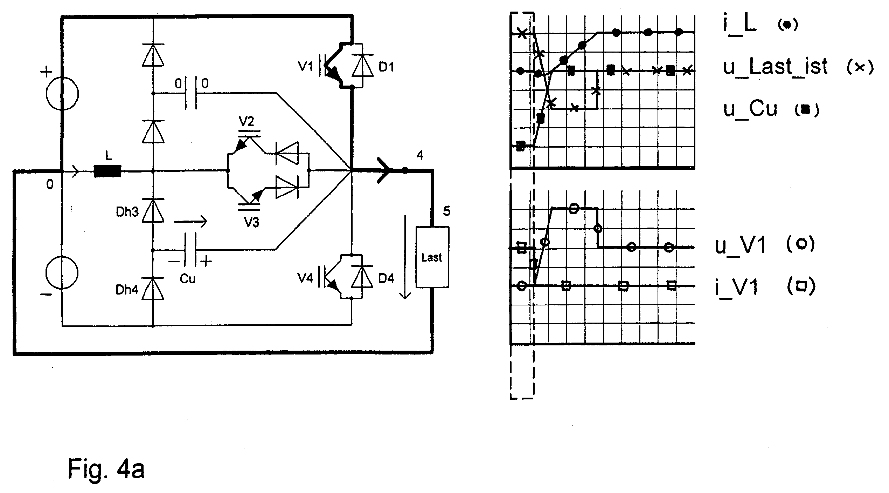

Im Folgenden wird beispielhaft einer der vier Kommutierungen, in diesem Beispiel die Kommutierung oben → mitte anhand der Figuren 4a bis 4d beispielhaft qualitativ beschrieben. Der linke Teil der Figuren zeigt dabei jeweils die vorgeschlagene Schaltungsanordnung mit einer angeschlossenen Last 5 bei positivem Laststrom. Der in dem jeweiligen Zustand auftretende Stromverlauf ist fett markiert. Der rechte Teil der Figuren zeigt jeweils den Verlauf der Sollspannung an der Last (u_Last_soll), den Istverlauf der Spannung an der Last (u_Last_ist), den Spannungsverlauf am unteren Kondensator Cu (u_Cu), den Stromverlauf an der Spule L (i_L), den Spannungsverlauf am oberen Schaltelement V1 (u_V1) und den Stromverlauf am oberen Schaltelement V1 (i_V1). Die jeweilige Phase der Kommutierung ist dabei mit der gestrichelten Umrandung angedeutet.

Figur 4a zeigt den Zustand vor der Kommutierung. Der Laststrom wird als ideal induktiv eingeprägt betrachtet. Es gilt also: Laststrom = const.

Das Schaltelement V1 wird angesteuert und führt diesen positiven Laststrom. Die Schaltelemente V2 und V4 sind gesperrt. Das Schaltelement V3 wird ebenfalls angesteuert, d. h. eingeschaltet, führt aber noch keinen Strom.

Der untere Kondensator Cu ist, wie dargestellt, auf die Eingangsgleichspannung aufgeladen. Der obere Kondensator Co nimmt an der im Folgenden beschriebenen Kommutierung nicht teil, seine Spannung bleibt 0. Der Pfad zum Mittelabgriff der Gleichspannung und damit die Spule L sind stromlos.

Die Kommutierung wird dadurch eingeleitet, dass das Schaltelement V1 gesperrt wird und gleichzeitig das Schaltelement V2 eingeschaltet wird. V3 bleibt weiter eingeschaltet, V4 bleibt gesperrt.

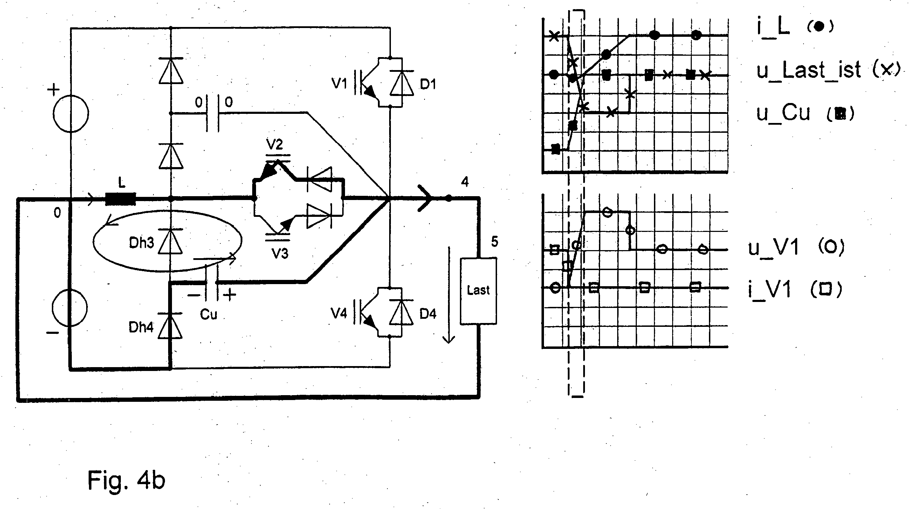

Figur 4b zeigt hierzu die erste Phase der Kommutierung. V1 wird schlagartig stromlos. Da der Laststrom induktiv eingeprägt ist, muss er weiter fließen. Er findet einen Pfad über die untere Hälfte der Gleichspannung, die Diode Dh4 und den Kondensator Cu. Dadurch beginnt die Entladung des Kondensators Cu. Wichtig dabei ist, dass unmittelbar nach dem Abfallen des Stroms durch V1 auf Null die Spannung an V1 nur einen sehr geringen Wert aufweist. Damit wird das gleichzeitige Auftreten hoher Werte von Strom und Spannung beim Ausschalten von V1 vermieden.

Da gleichzeitig mit dem Sperren von V1 das Schaltelement V2 eingeschaltet wird, ergibt sich ein zweiter Stromkreis aus V2 mit der in Serie geschalteten Diode D2, der Spule L, der unteren Hälfte der Gleichspannung, der Diode Dh4 und dem Kondensator Cu. Dieser Stromkreis ist ein Schwingkreis. Entsprechend beginnt ein sinusförmiger Strom durch die Spule L (in negativer Richtung).

Beide Teilvorgänge überlagern sich. Das Ende dieser ersten Phase der Kommutierung ergibt sich dadurch, dass der Kondensator Cu entladen ist. Er kann sich aufgrund der Diode D4 nicht auf eine umgekehrte Polarität aufladen. Stattdessen wechselt der Strom von Cu auf diese Diode D4. Gleichzeitig mit u_Cu = 0 ist auch der Strom durch L zu Null geworden. Dies hat allerdings keine Bedeutung.

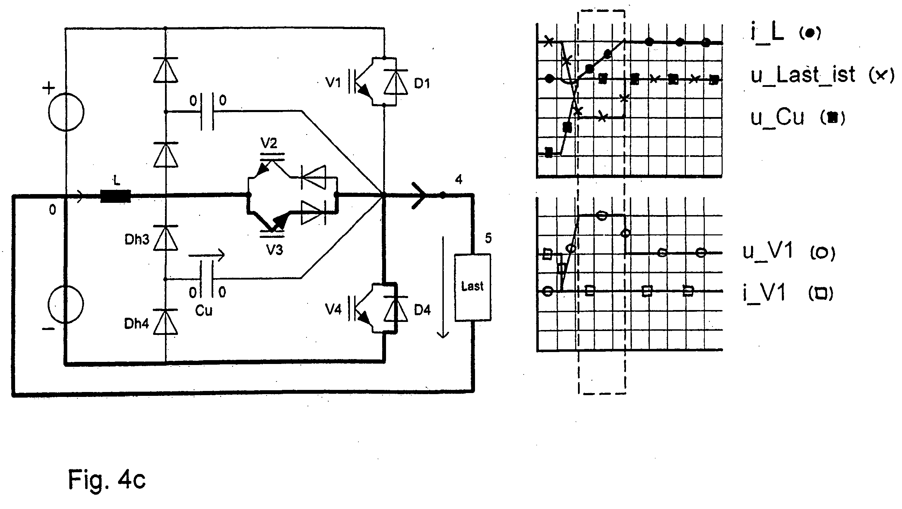

Figur 4c zeigt die zweite Phase der Kommutierung. Nach wie vor sind V2 und V3 eingeschaltet, V1 und V4 ausgeschaltet. Zunächst ist der Strom durch L weiterhin Null und der Laststrom fließt in voller Höhe durch D4. Da aber an der Spule L die untere Hälfte der Gleichspannung anliegt, nimmt der Strom durch L zeitlinear zu und der Strom durch D4 entsprechend zeitlinear ab. Diese zweite Phase der Kommutierung endet damit, dass der Strom durch D4 zu Null wird und D4 sperrt.

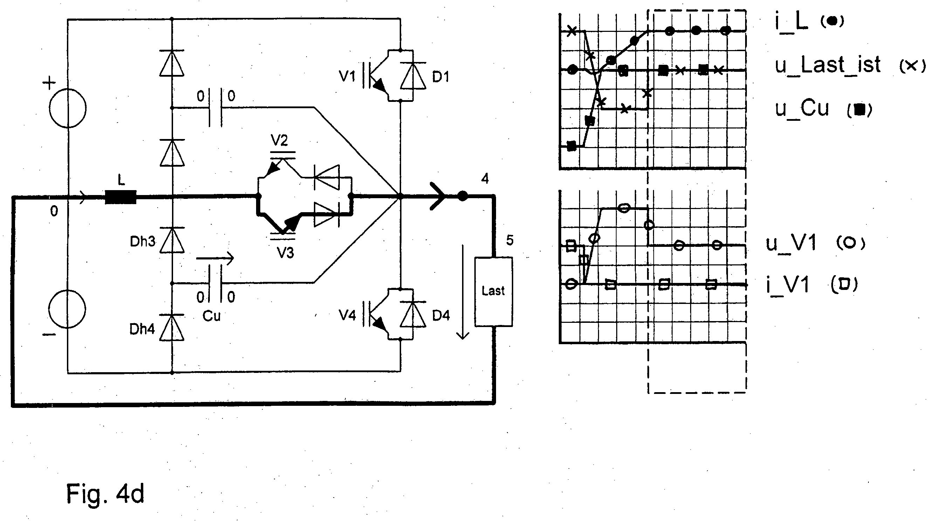

Figur 4d zeigt schließlich den Zustand nach der Kommutierung. Nach wie vor sind V2 und V3 eingeschaltet, V2 ist jedoch stromlos. Der Laststrom fließt über V3 und die in Serie geschaltete Diode D3. V1 und V4 bleiben weiter gesperrt. Beide Kondensatoren Co und Cu sind entladen, ihre Spannungen sind Null. Der Laststrom fließt nun über den mittleren Brückenzweig.

Die weiteren Kommutierungen laufen in vergleichbarer Weise ab, wobei sich jedoch zwangsläufig andere Stromverläufe ergeben. Allerdings wird bei jedem dieser Kommutierungen ein "weiches" Schalten erreicht, bei dem nicht gleichzeitig, wie beim "harten" Schalten, hohe Werte von Spannung und Strom an den Schaltelementen V1 bis V4 sowie den Dioden D1 bis D4 auftreten. Entweder steigt die Spannung oder der Strom an den Ventilen V1 bis V4 sowie den Dioden D1 bis D4 zeitverzögert an. Damit werden mit der vorliegenden Schaltungsanordnung Schaltverluste weitgehend vermieden.

Ein Beispiel einer Realisierung einer derartigen Schaltungsanordnung ist für eine Eingangs-Gleichspannung von 2 x 270 V = 540 V, einen Ausgangsstrom von bis zu 25 A (Scheitelwert) und eine Leistung von 3,3 kVA einphasig (entspricht 10 kVA dreiphasig) ausgelegt. Dabei werden folgende Komponenten eingesetzt:
für den Pulswechselrichter
   - zwei IGBT-Module vom Typ SEMIKRON SKM50GB12V
   - ein Diodenmodul vom Typ SEMIKRON SKKD42F1000.
für das Entlastungsnetzwerk
   - eine Spule L = 14 µH; Ferritkern RM14
   - zwei Kondensatoren C = 33 nF; Typ MKP10
   - vier Dioden vom Typ DIOTEC UF600M

Für den Betrieb der vorliegenden Schaltungsanordnung werden Steuerschaltungen (Treiber) für die einzelnen Schaltelemente sowie eine Mikrokontroller-Steuerung zur Erzeugung der pulsweitenmodulierten Signale eingesetzt. Derartige Steuereinrichtungen sind aus dem Stand der Technik bekannt.

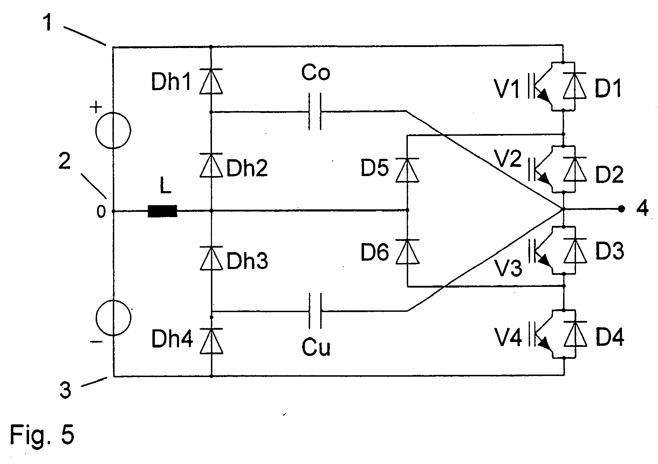

Figur 5 zeigt ein weiteres Beispiel der vorgeschlagenen Schaltungsanordnung, bei der der 3-Stufen-Pulswechselrichter als 3L-NPC Wechselrichter ausgebildet ist. Dieser Wechselrichter umfasst die vier Schaltelemente V1 bis V4 mit den jeweils antiparallel geschalteten Dioden D1 bis D4. Zusätzlich sind bei diesem Wechselrichter zwei zusätzliche Dioden D5, D6 erforderlich, wie dies aus der Figur 5 ersichtlich ist. Auch hier ist das Entlastungsnetzwerk in gleicher Weise aufgebaut und verschaltet, wie dies bereits in Verbindung mit Figur 3 näher erläutert wurde.

Bei dieser Schaltungsanordnung geht allerdings einer der wesentlichen Vorteile des 3L-NPC Wechselrichters verloren. Dieser besteht darin, dass alle Schaltelemente nur für die halbe Gleichspannung ausgelegt werden müssen. Wird ein 3L-NPC Wechselrichter mit dem vorgeschlagenen Entlastungsnetzwerk kombiniert, wie in Figur 5 dargestellt, so müssen die beiden äußeren Schaltelemente V1 und V4 für die gesamte Gleichspannung ausgelegt werden.

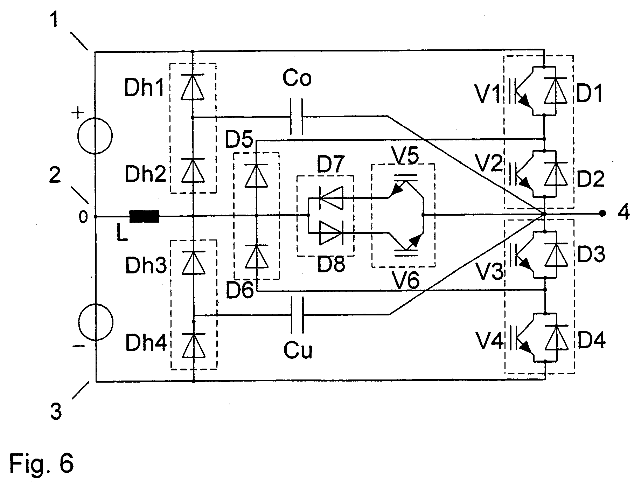

Dieser zuletzt genannte Nachteil kann in einer weiteren Ausgestaltung der vorliegenden Schaltungsanordnung vermieden werden, wie sie in Figur 6 dargestellt ist. Dazu müssen zwei weitere Schaltelemente V5 und V6, bspw. IGBT, und zwei weitere Dioden D7 und D8 eingesetzt werden, wie dies in der Figur ersichtlich ist. Der Aufwand steigt daher gegenüber den Ausgestaltungen der Figuren 3 und 5 erheblich an. Allerdings kann diese Variante im Mittelspannungsbereich, bspw. bei Eingangsgleichspannungen zwischen ca. 2000 und 3000 V, sinnvoll sein, da dann trotz der hohen Gleichspannung IGBT der preisgünstigen Spannungsklasse 1700 V eingesetzt werden könnten.

Auch hier besteht die Möglichkeit, den Schaltungsaufbau mit kommerziell erhältlichen Modulen zu realisieren, die gestrichelt in der Figur 6 angedeutet sind.

Von den drei beispielhaft angeführten Schaltungsvarianten der vorliegenden Schaltungsanordnung bietet die erste Variante der Figur 3 mit der Ausgestaltung des 3-Stufen-Pulswechselrichters in 3L-SC Form die meisten Vorteile hinsichtlich des einfachen und kostengünstigen Aufbaus. Dies führt bereits zum bevorzugten Einsatzgebiet. Da die äußeren Schaltelemente für die volle Gleichspannung auszulegen sind, sollte diese nicht zu hohe Werte annehmen. Sinnvoll könnte der Bereich von ca. 600 V bis ca. 1200 V sein. In diesem Bereich könnten dann bspw. 1200 V- oder 1700 V-Module eingesetzt werden, die in großen Stückzahlen preisgünstig hergestellt werden. Dieser Spannungsbereich ist bei Photovoltaik-Wechselrichtern und elektrischen Antrieben im Niederspannungsbereich (z. B. auch bei Hybrid-Automobilen) gegeben. Ein anderer sinnvoller Bereich könnte zwischen ca. 3000 V und ca. 4500 V liegen. In diesem Bereich könnten dann 6500 V-Bauteile eingesetzt werden, wie sie für Mittelspannungsantriebe (z. B. Nahverkehrs- und Vollbahnen) hergestellt werden.

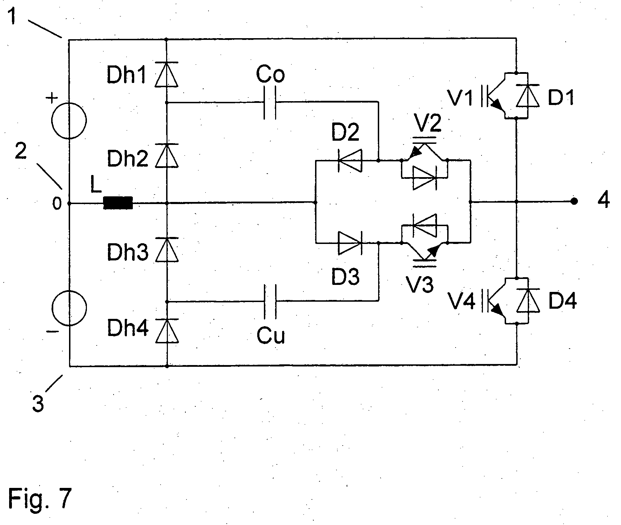

Figur 7 zeigt eine weitere mögliche Ausgestaltung der vorgeschlagenen Schaltungsanordnung, die sich durch eine geänderte Ankopplung des Entlastungsnetzwerkes an den 3-Stufen-Pulswechselrichter auszeichnet. Anstelle der direkten Verbindung der beiden Kondensatoren Cu und Co mit dem Ausgangsanschluss 4 sind diese hier über die beiden inneren Schaltelemente V2 bzw. V3 mit dem Ausgangsanschluss 4 verbunden. Dies erfordert auch zwei zusätzliche Dioden, wie dies in der Figur erkennbar ist. Diese geänderte Ankopplung hat keine Auswirkung auf die weiter vorne beschriebenen Kommutierungen. Es ergibt sich jedoch eine zusätzliche Betriebsart. Bleiben die beiden inneren Schaltelemente V2, V3 dauerhaft gesperrt, so wird das Entlastungsnetzwerk vom 3-Stufen-Pulswechselrichter abgekoppelt. Der 3-Stufen-Pulswechselrichter geht dann in einen "hart" schaltenden 2-Stufen-Pulswechselrichter über, bei dem nur noch die beiden äußeren Schaltelemente V1 und V4 alternierend im Sinne einer Pulsweitenmodulation eingeschaltet werden.

Diese Betriebsart kann bspw. bei Photovoltaik-Wechselrichtern sinnvoll sein. Diese werden bei bewölktem Himmel häufig im unteren Teillastbereich betrieben. Wenn das Entlastungsnetzwerk dabei in Funktion ist, produziert es unerwünschte Verluste, z. B. in der Spule, die den Wirkungsgrad mindern. Hier kann es günstiger sein, das Entlastungsnetzwerk außer Betrieb zu nehmen und mit einem "hart" schaltenden 2-Stufen-Pulswechselrichter zu arbeiten. Die hier beispielhaft vorgeschlagene Schaltungsanordnung ermöglicht einen derartigen Wechsel der Betriebsweise.

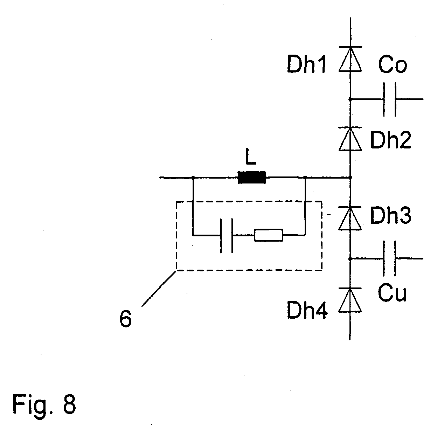

Bei einer möglichen Erweiterung der vorliegenden Schaltungsanordnung wird parallel zur Spule L des Entlastungsnetzwerks ein Zweipol 6 mit teilweiser ohmscher Charakteristik geschaltet. Dies kann bspw. mit einer Serienschaltung eines Kondensators und eines Widerstand realisiert werden, wie dies in der Figur 8 dargestellt ist. Die Spule L des Entlastungsnetzwerks kann unter Umständen am Ende einer Kommutierung mit parasitären Kapazitäten (z. B. durch IGBT und Dioden) einen Schwingkreis bilden und zu hochfrequenten Schwingungen von einigen MHz führen. Diese Schwingungen sind unter EMV-Gesichtspunkten unerwünscht. Mit der hier vorgeschlagenen Erweiterung eines geeignet dimensionierten Zweipols werden diese Schwingungen gedämpft, so dass die EMV-Verträglichkeit erhöht wird.

Für zahlreiche Anwendungen ist es wünschenswert, für manche Anwendungen wie bspw. in der Luftfahrt auch erforderlich, die Spannungssteilheiten du/dt der Ausgangsspannungen zur Erhöhung der elektromagnetischen Verträglichkeit zu begrenzen, bspw. auf Werte zwischen 500 V/µs und 1000 V/µs. Durch die vorgeschlagene Schaltungsanordnung wird eine derartige Begrenzung bereits zum Teil erreicht, allerdings nicht bei allen Kommutierungen, sondern nur etwa bei der Hälfte dieser Vorgänge. Mit einer sehr einfachen Maßnahme lässt sich diese Begrenzung jedoch für den gesamten Betrieb der Schaltungsanordnung, d.h. auf alle Kommutierungen ausdehnen. Dazu wird insbesondere der Einschaltvorgang der äußeren Schaltelemente V1, V4 gezielt verlangsamt. Ein solcher Betrieb des Pulswechselrichters ist dann besonders EMV-freundlich. Die zusätzliche Verzögerung kann einfach durch die Treiber der einzelnen Schaltelemente realisiert werden.

Die Spannungssteilheit du/dt der Ausgangsspannung wird dabei über die Art der Ansteuerung der IGBT, JFET oder MOSFET verringert. Diese werden mit einer Steuerspannung angesteuert, z.B. -15 V für den AUSZustand und +15 V für den EIN-Zustand. Wenn nun beim Einschalten den Übergang der Steuerspannung von -15 V zu +15 V gezielt verlangsamt wird, sinkt der Wert du/dt der Ausgangsspannung.

Bei hart schaltenden Pulswechselrichtern ist dies deshalb nicht möglich, weil jetzt der Einschaltvorgang, d.h. die Abnahme der Spannung am Schaltelement (bei bereits vollem Laststrom!) insgesamt länger dauert und somit die Einschaltverlustenergie E_on deutlich größer wird. Man muss entweder die hohen du/dt hinnehmen oder zwischen Pulswechselrichter und Motor aufwendige Filter zur du/dt-Reduktion schalten.

Bei der erfindungsgemäßen Schaltung ist diese Verlangsamung deshalb möglich, weil der Strom durch das Schaltelement wegen der Spule L nur mit begrenztem di/dt ansteigen kann. Die Spannung am Schaltelement fällt mit beispielsweise 500 V/µs, der Strom steigt mit beispielsweise 30 A/µs an. Es ergibt sich gegenüber einem vollständig entlasteten Einschaltvorgang eine geringfügig höhere Verlustenergie E_on, die aber tolerierbar ist. Aufwendige Filter sind hierbei nicht erforderlich.

Die Realisierung dieser Verlangsamung kann auf einfache Weise dadurch erfolgen, dass zwischen die Treiberschaltung und den Steueranschluss der IGBT etc. ein geeignet dimensionierter ohmscher Widerstand geschaltet wird. Dessen verlangsamende Wirkung wird in den Datenblättern spezifiziert (Diagramm Schaltzeiten als Funktion des Gate-Vorwiderstands R_Gate).

Selbstverständlich sind auch Modifikationen der in den Beispielen dargestellten Schaltungsanordnungen möglich, wie beispielsweise eine Vertauschung der Reihenfolge des Schaltelementes V2 bzw. V5 und der damit in Serie geschalteten Diode D2 bzw. D7 und/oder eine Vertauschung des Schaltelementes V3 bzw. V6 und der damit in Serie geschalteten Diode D3 bzw. D8 der Figur 3 bzw. Figur 6. Beides wirkt sich auf die Funktionsweise der vorgeschlagenen Schaltungsanordnung nicht aus. Es könnten sich jedoch Vorteile bei der Art der verwendbaren Halbleitermodule ergeben.

Die vorgeschlagene Schaltungsanordnung hat gegenüber herkömmlichen Pulswechselrichtern geringere Verluste und somit einen geringeren Kühlmittelbedarf. Weitere Vorteile sind ein höherer Wirkungsgrad, eine Leistungssteigerung sowie die Möglichkeit der Erhöhung der Schaltfrequenz.

### Bezugszeichenliste

- 1: Eingangsanschluss für positiven Pol
- 2: Eingangsanschluss für Mittelabgriff
- 3: Eingangsanschluss für negativen Pol
- 4: Ausgangsanschluss
- 5: Last
- 6: Zweipol
- L: Spule des Entlastungsnetzwerks
- Co, Cu: Kondensatoren des Entlastungsnetzwerks
- Dh1 - Dh4: Dioden des Entlastungsnetzwerks
- V1 - V6: Schaltelemente des Wechselrichters
- D1 - D8: Dioden des Wechselrichters
- U_{d}: Eingangsspannung

## Patentansprüche

1. Schaltungsanordnung, die wenigstens einen 3-Stufen-Pulswechselrichter mit einem Entlastungsnetzwerk umfasst und Eingangsanschlüsse (1-3) für einen positiven Pol, einen negativen Pol und einen Mittelabgriff einer Eingangsspannung sowie einen Ausgangsanschluss (4) aufweist,
wobei der Pulswechselrichter wenigstens zwei äußere Schaltelemente (V1, V4), die mit den Eingangsanschlüssen (1, 3) für den positiven und den negativen Pol der Eingangsspannung verbunden sind, und zwei innere Schaltelemente (V2, V3) aufweist, die mit dem Ausgangsanschluss (4) verbunden sind, **dadurch gekennzeichnet,**
**dass** das Entlastungsnetzwerk aus wenigstens einer Spule (L), zwei Kondensatoren (Cu, Co) und einer Reihenschaltung aus vier in gleicher Richtung gepolten Dioden (Dhl-Dh4) gebildet ist, wobei
- die beiden äußeren (Dh1, Dh4) der vier Dioden jeweils direkt mit den Eingangsanschlüssen (1, 3) für den positiven und den negativen Pol der Eingangsspannung verbunden sind,
- eine elektrische Verbindung zwischen den beiden inneren (Dh2, Dh3) der vier Dioden einerseits über die Spule (L) mit dem Eingangsanschluss (2) für den Mittelabgriff der Eingangsspannung und andererseits mit einem mittleren Brückenzweig des Pulswechselrichters verbunden ist, der eine Verbindung zwischen der elektrischen Verbindung zwischen den beiden inneren (Dh2, Dh3) der vier Dioden und dem Ausgangsanschluss (4) des Pulswechselrichters ermöglicht, und
- die beiden Kondensatoren (Cu, Co) jeweils mit einem Anschluss mit jeweils einer elektrischen Verbindung zwischen einer der inneren (Dh2, Dh3) und der in der Reihenschaltung jeweils benachbarten äußeren (Dh1, Dh4) der vier Dioden und mit dem anderen Anschluss direkt oder über die beiden inneren Schaltelemente (V2, V3) des Pulswechselrichters mit dem Ausgangsanschluss (4) verbunden sind.

2. Schaltungsanordnung nach Anspruch 1,
**dadurch gekennzeichnet,**
**dass** der 3-Stufen-Pulswechselrichter als 3-Level-Stack-Cell Wechselrichter ausgebildet ist.

3. Schaltungsanordnung nach Anspruch 1,
**dadurch gekennzeichnet,**
**dass** der 3-Stufen-Pulswechselrichter als 3-Level-Neutral-Point-Clamped Wechselrichter ausgebildet ist

4. Schaltungsanordnung nach Anspruch 1,
**dadurch gekennzeichnet,**
**dass** der 3-Stufen-Pulswechselrichter als 3-Level-Neutral-Point-Clamped Wechselrichter ausgebildet ist, wobei der mittlere Brückenzweig zusätzlich zwei parallel geschaltete Schaltelemente (V5, V6) mit jeweils einer in Reihe geschalteten Diode (D7, D8) umfasst, über die die elektrische Verbindung zwischen den beiden inneren (Dh2, Dh3) der vier Dioden des Entlastungsnetzwerks mit dem Ausgangsanschluss (4) verbunden ist.

5. Schaltungsanordnung nach einem der Ansprüche 1 bis 4, **dadurch gekennzeichnet,**
**dass** parallel zur Spule (L) des Entlastungsnetzwerks ein Zweipol (6) zur Schwingungsdämpfung geschaltet ist.

6. Schaltungsanordnung nach einem der Ansprüche 1 bis 5 mit einer Steuereinrichtung zur pulsweitenmodulierten Ansteuerung der Schaltelemente.

7. Schaltungsanordnung nach Anspruch 6,
**dadurch gekennzeichnet,**
**dass** die Steuereinrichtung eine Treiberschaltung für die Schaltelemente mit einem oder mehreren Bauelementen umfasst, die die Steilheit einer Anstiegsflanke beim Umschalten der Steuerspannung für ein Einschalten der äußeren Schaltelemente verringern.

## Claims

1. A circuit arrangement which comprises at least one 3-level pulse width modulation inverter with a snubber circuit and comprises input terminals (1-3) for a positive pole, a negative pole and a centre tap of an input voltage as well as an output terminal (4),
wherein the pulse width modulation inverter comprises at least two outer switching elements (V1, V4), which are connected to the input terminals (1, 3) for the positive and the negative pole of the input voltage, and two inner switching elements (V2, V3), which are connected to the output terminal (4),
**characterised in that**
the snubber circuit is formed by at least one coil (L), two capacitors (Cu, Co) and a series connection comprising four diodes (Dh1-Dh4) poled in the same direction, wherein
- the two outer (Dh1, Dh4) of the four diodes are in each case directly connected to the input terminals (1, 3) for the positive and the negative pole of the input voltage,
- an electrical connection between the two inner (Dh2, Dh3) of the four diodes is connected on the one hand via the coil (L) to the input terminal (2) for the centre tap of the input voltage and on the other hand to a central bridge branch of the pulse width modulation inverter, which bridge branch enables a connection between the electrical connection between the two inner (Dh2, Dh3) of the four diodes and the output terminal (4) of the pulse width modulation inverter, and
- the two capacitors (Cu, Co) are in each case connected with one terminal to, in each case, an electrical connection between one of the inner (Dh2, Dh3) and the outer (Dh1, Dh4) of the four diodes respectively adjacent in the series connection, and with the other terminal directly or via the two inner switching elements (V2, V3) of the pulse width modulation inverter to the output terminal (4).

2. The circuit arrangement according to Claim 1,
**characterised in that**
the 3-level pulse width modulation inverter is designed as a 3-level stack cell inverter.

3. The circuit arrangement according to Claim 1,
**characterised in that**
the 3-level pulse width modulation inverter is designed as a 3-level neutral point clamped inverter.

4. The circuit arrangement according to Claim 1,
**characterised in that**
the 3-level pulse width modulation inverter is designed as a 3-level neutral point clamped inverter, wherein the central bridge branch additionally comprises two parallel-connected switching elements (V5, V6) with one diode (D7, D8) connected in series in each case, by means of which the electrical connection between the two inner (Dh2, Dh3) of the four diodes of the snubber circuit is connected to the output terminal (4).

5. The circuit arrangement according to one of Claims 1 to 4,
**characterised in that**
a two-terminal network (6) is connected parallel to the coil (L) of the the snubber circuit for oscillation damping.

6. The circuit arrangement according to one of Claims 1 to 5 with a control apparatus for pulse-width modulated control of the switching elements.

7. The circuit arrangement according to Claim 6,
**characterised in that**
the control apparatus comprises a driver circuit for the switching elements with one or a plurality of components which reduce the steepness of a rising edge when switching over the control voltage for switching on the outer switching elements.

## Revendications

1. Dispositif de circuit, qui comprend au moins un onduleur à impulsions à 3 niveaux avec un réseau de décharge et présente des connexions d'entrée (1-3) pour un pôle positif, un pôle négatif et un point médian d'une tension d'entrée ainsi qu'une connexion de sortie (4), dans lequel l'onduleur à impulsions présente au moins deux éléments de commutation extérieurs (V1,V4), qui sont reliés aux connexions d'entrée (1,3) pour le pôle positif et le pôle négatif de la tension d'entrée, et deux éléments de commutation intérieurs (V2,V3), qui sont reliés à la connexion de sortie (4), **caractérisé en ce que** le réseau de décharge est formé par au moins une bobine (L), deux condensateurs (Cu, Co) et un circuit en série constitué de quatre diodes (Dh1-Dh4) polarisées dans la même direction, dans lequel
- les deux diodes extérieures (Dh1, Dh4) des quatre diodes sont respectivement reliées directement aux connexions d'entrée (1,3) pour le pôle positif et négatif de la tension d'entrée,
- une liaison électrique entre les deux diodes intérieures (Dh2, Dh3) des quatre diodes est reliée d'un côté par l'intermédiaire de la bobine (L) avec la connexion d'entrée (2) pour le point médian de la tension d'entrée et d'un autre côté avec une branche de pont centrale de l'onduleur à impulsions, qui permet une liaison entre la liaison électrique entre les deux diodes intérieures (Dh2, Dh3) des quatre diodes et la connexion de sortie (4) de l'onduleur à impulsions, et
- les deux condensateurs (Cu, Co) sont reliés respectivement avec une connexion avec respectivement une liaison électrique entre une des diodes intérieures (Dh2, Dh3) et la diode extérieure respectivement voisine dans le circuit en série (Dh1, Dh4) des quatre diodes et avec l'autre connexion directement ou par l'intermédiaire des deux éléments de commutation intérieurs (V2, V3) de l'onduleur à impulsions avec la connexion de sortie (4).

2. Dispositif de circuit selon la revendication 1, **caractérisé en ce que** l'onduleur à impulsions à 3 niveaux est conçu comme un onduleur à cellule à pile à 3 niveaux.

3. Dispositif de circuit selon la revendication 1, **caractérisé en ce que** l'onduleur à impulsions à 3 niveaux est conçu comme un onduleur à structure NPC (Neutral Point Clamped) à 3 niveaux.

4. Dispositif de circuit selon la revendication 1, **caractérisé en ce que** l'onduleur à impulsions à 3 niveaux est conçu comme un onduleur à structure NPC (Neutral Point Clamped) à 3 niveaux, dans lequel la branche de pont centrale comprend en outre deux éléments de commutation branchés en parallèle (V5, V6) avec respectivement une diode branchée en série (D7, D8), par l'intermédiaire de laquelle la liaison électrique entre les deux diodes intérieures (Dh2, Dh3) des quatre diodes du réseau de décharge est reliée avec la connexion de sortie (4).

5. Dispositif de circuit selon une des revendications 1 à 4, **caractérisé en ce que** parallèlement à la bobine (L) du réseau de décharge un dipôle (6) est branché à des fins d'atténuation des oscillations.

6. Dispositif de circuit selon une des revendications 1 à 5 comportant un dispositif de commande pour la commande modulée par largeur d'impulsions des éléments de commutation.

7. Dispositif de circuit selon la revendication 6, **caractérisé en ce que** le dispositif de commande comprend un circuit d'attaque pour les éléments de commutation avec un ou plusieurs composants, qui diminuent la raideur d'un front de montée lors de la commutation de la tension de commande pour une mise sous tension des éléments de commutation extérieurs.
